# FASCICULE DE BREVET EUROPEEN

(11) **EP 1 276 989 B1**
(45) Date de publication et mention de la délivrance du brevet: **13.10.2004**
(21) Numéro de dépôt: 01919569.2
(22) Date de dépôt: 27.03.2001
(51) Int. Cl.: F03D 5/06

(54) **EOLIENNE A BALANCIER MULTIDIRECTIONNEL**
WINDKRAFTANLAGE NACH DEM PRINZIP EINES MULTIDIREKTIONALEN PENDELS
WINDMILL WITH MULTIDIRECTIONAL LEVER ARM

(30) Priorité: 28.03.2000 FR 0003875
(43) Date de publication de la demande: 22.01.2003
(73) Titulaire: Blanc, Philippe, 91940 les Ulis (FR); Perrot, Patrick, 60420 Leglantiers (FR)
(72) Inventeur: Blanc, Philippe, 91940 les Ulis (FR); Perrot, Patrick, 60420 Leglantiers (FR)
(74) Mandataire: Laget, Jean-Loup
(86) Numéro de dépôt international: PCT/FR2001/000915
(87) Numéro de publication internationale: WO 2001/073291

(56) Documents cités:
- EP-A- 0 647 782
- WO-A-96/12105
- FR-A- 526 804
- FR-A- 2 473 123
- US-A- 4 311 435
- US-A- 5 009 571

## Description

La présente invention concerne un dispositif économique et rapidement mis en oeuvre de récupération de l'énergie éolienne basé sur le principe du balancier sollicité par le vent en première course et rappelé par un contrepoids en course de rappel.

Les éoliennes traditionnelles actuelles , telle que divulguées par example dans la demande WO 96/12 105, sont basées sur la sollicitation au vent de rotors à pales inclinées, montés sur des axes horizontaux ou verticaux reposant sur des structures importantes offrant une forte prise au vent et nécessitant un ancrage au sol très étudié. Par ailleurs, ces rotors doivent saisir le vent en altitude, ce qui impose une transmission de rappel importante pour amener la force motrice au sol.

Le dispositif selon l'invention permet d'obtenir à moindre coût une éolienne fonctionnant suivant un mouvement de balancier appliqué à une perche pivotant autour d'un point axial, équipée d'une voilure à cadre orientable en partie haute et d'un contrepoids de rappel en partie basse. La voilure se positionne alternativement en prise au vent et en drapeau respectivement lors des phases aller et retour du mouvement de balance, la perche reposant en partie basse par l'intermédiaire d'un cadre sur un dispositif mécanique assurant la transformation des oscillations multidirectionnelles auxquelles elle est soumise en pulsions rotatives toujours de même sens appliquées sur un arbre de sortie.

Cette éolienne est donc basée sur le principe d'un mouvement alternatif de balancement entretenu par l'action du vent sur une voilure, l'inertie d'un contrepoids entretenant ce balancement et de l'inertie d'un volant cinétique placé en sortie du système. Cette énergie de sortie est stockée par divers procédés adaptés tels qu'accumulateurs électriques, cuves d'air comprimé, ou autres afin de la restituer de manière régulée et aux heures d'utilisation à des fins de production électrique, pompages ou autres.

Selon des modes particuliers de réalisation :
- la perche repose sur le dispositif mécanique par l'intermédiaire d'un cadre d'où sont issus deux ergots disposés en vis à vis dans le prolongement l'un de l'autre suivant un axe perpendiculaire à celui de la perche et le rencontrant au point axial.
- le cadre et ses deux ergots font office de fourchette pivotant selon un des axes d'un caisson carré en le saisissant extérieurement par deux douilles-palier aménagées chacune au milieu d'une de deux faces opposées de ce caisson.
- le caisson carré est lui-même engagé par deux autres douilles-palier aménagées chacune au milieu d'une de ses deux autres faces opposées, sur un arbre fixe sur lequel il pivote suivant son deuxième axe, en entraînant le cadre.
- quatre engrenages pignons de même rapport sont disposés en prise extérieurement autour au caisson, libres sur leur support, excepté l'un d'entre eux qui est solidaire de l'ergot sur lequel il est engagé.
- chacun des pignons engagés sur l'arbre fixe entraîne un couple de systèmes d'irréversibles à simple effet, disposés de manière à ce qu'ils provoquent sur deux arbres s'entraînant mutuellement, des pulsions rotatives de même sens.
- la voilure se compose d'un ou plusieurs éléments pivotant de façon alternative d'environ 90° par l'action d'une ou plusieurs masselottes agissant par gravité à chaque inclinaison extrême de la perche.
- le mouvement de pivot des éléments de voilure peut se commander par l'action d'un ou plusieurs moteurs électriques déclenchés par des plots mis en contact à chaque inclinaison extrême de la perche. Ces moteurs fonctionnent par accumulateurs alimentés par une faible partie du courant produit par le système,
- la voilure se remet en position de prise au vent par retour gravitationnel des masselottes, ou impulsion électrique, lors du repos vertical de la perche.
- la perche est pourvue en toute ou partie de sa hauteur d'un carénage à profil aérodynamique pouvant jouer en libre pivot autour de son axe et s'orienter, ainsi que la voilure, suivant le sens du vent grâce à un empennage.

Les dessins annexés illustrent l'invention :

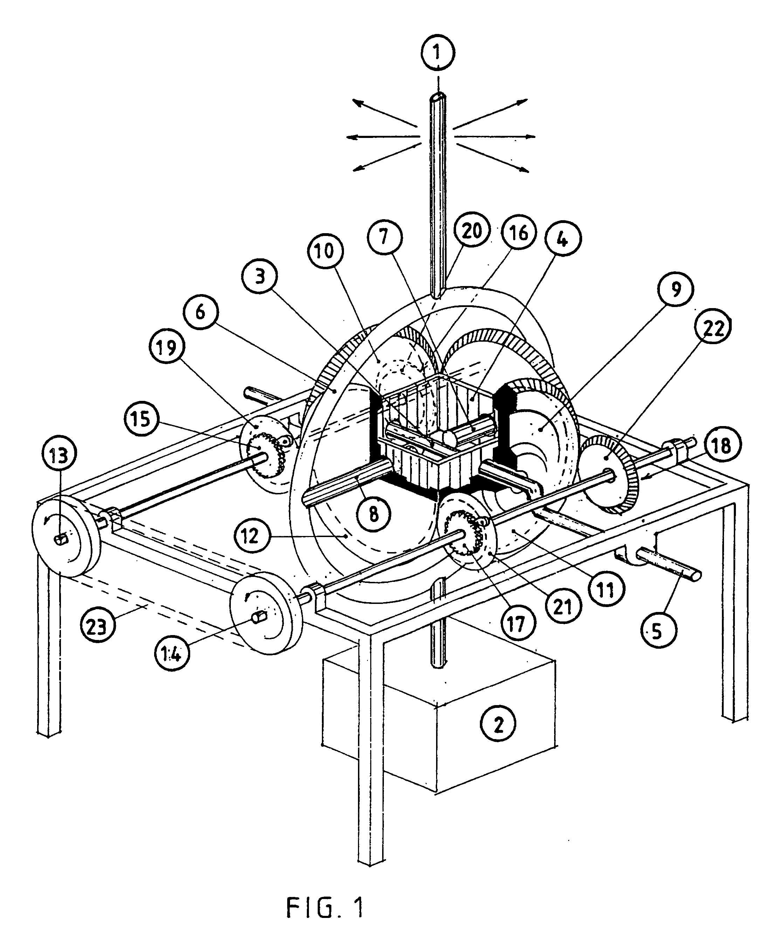

- la figure 1 représente en perspective partiellement sectionnée l'ensemble du mécanisme de transformation du mouvement oscillatoire de la perche par l'intermédiaire de son cadre en pulsions rotatives.

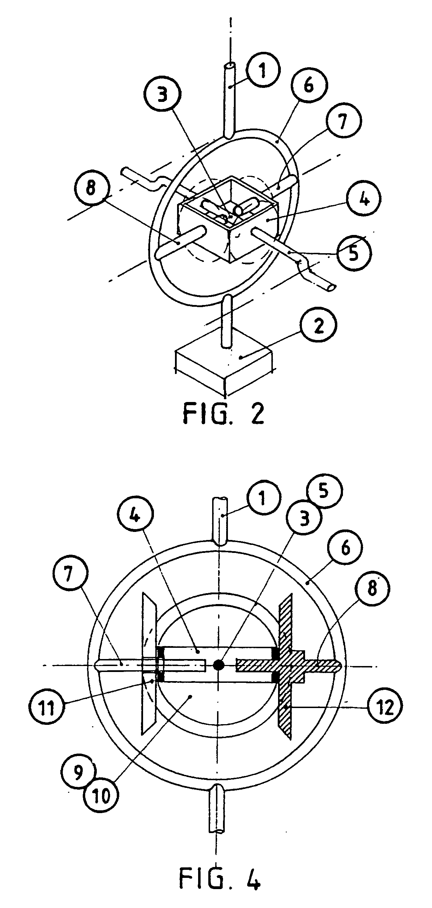

- La figure 2 représente en perspective le détail d'un caisson carré sur les faces duquel sont aménagées quatre douilles-palier recevant l'arbre fixe principal d'une part et les deux ergots issus du cadre de la perche d'autre part.
- La figrre 3 représente en section voe de dessas le système complet comprenant quatre pignons coniques de même rapport. La figure représente également les deux arbres recevant les pulsions rotatives par l'intermédiaire de deux engrenages couplés à des irréversibles montés en opposition sur chacun d'eux.

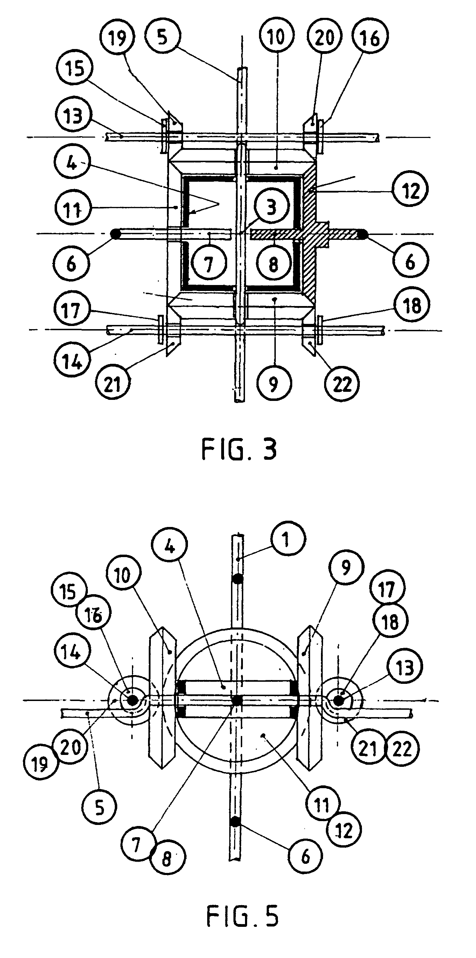

- La figure 4 représente ce même système en section suivant un plan perpendiculaire à l'arbre fixe principal.
- La figure 5 représente ce même système en section suivant un plan perpendiculaire aux ergots du cadre de la perche.

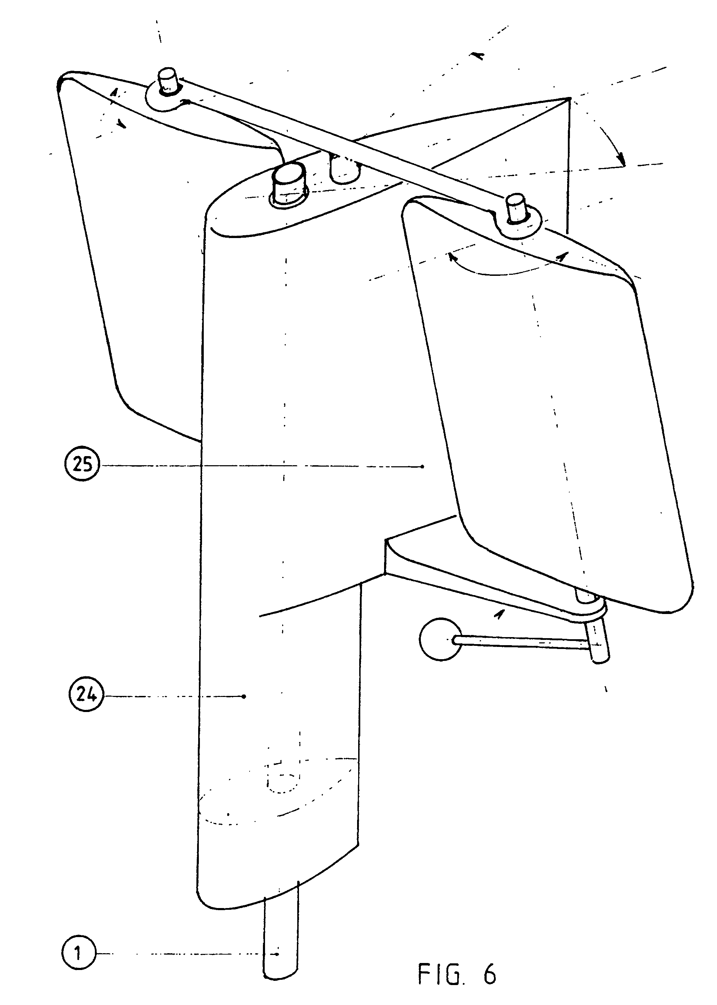

- La figure 6 représente la voilure en partie haute de la perche habillée de son carénage et une possibilité d'agencement des éléments de voilure et des masselottes commandant leur pivot en agissant par gravité en phase d'extrême amplitude de la perche.

En référence à ces dessins, le système comprend une perche (1) habillée d'un carénage (24) orienté au vent grâce à un empennage (25). Cette perche, lestée par un contrepoids (2) et équipée d'une voilure, est animée d'un mouvement oscillatoire multidirectionnel selon un faisceau concourant au point axial (3) et reposant sur un mécanisme constitué :
- d'un caisson carré (4) équipé au milieu de chacune de ses faces d'une douille-palier et pivotant sur l'arbre fixe (5).
- d'un cadre (6) solidaire de la perche (1) d'où sont issus deux ergots co-axiaux (7) et (8) engagés par l'extérieur sur deux douilles-palier opposées du caisson et permettant au cadre et à la perche de pivoter autour de l'axe des ergots.
- de quatre pignons d'engrenage coniques (9), (10), (11) et (12) de même rapport disposés en prise autour du caisson (4), sur l'arbre fixe (5) d'une part et sur chacun des deux ergots (7) et (8) d'autre part. Un seul pignon (12) est solidaire de l'ergot (8) sur lequel il est engagé, les trois autres pignons étant libres, chacun sur son support.
- de deux arbres (13) et (14) réceptacles des pulsions rotatives de même sens provoquées par deux systèmes d'irréversibles (15)et(16) d'une part, (17)et(18)d'autre part, montés en effet contraire respectivement sur chacun d'eux et entraînés par les engrenages (19)et(20) d'une part, (21)et(22) d'autre part, entraînés respectivement avec les pignons (9) et (10).
- d'un agent de liaison (23) tel que chaîne ou engrenages reliant en rotation de même sens les arbres (13) et (14).

A titre d'exemple non limitatif, le mécanisme occupera un volume d'environ 1m x 1m x 1m (non compris accessoires de stockage d'énergie) et la perche aura une longueur de 20 mètres.

Cette éolienne est particulièrement destinée à fournir un apport d'énergie électrique en sites isolés et difficilement accessibles ou en apport de secours par unités foraines lors de sinistre ayant détérioré les réseaux de distributions traditionnels.

## Revendications

1. Eolienne fonctionnant suivant un mouvement de balancier appliqué à une perche (1) pivotant autour d'un point axial (3), équipée d'une voilure en partie haute et d'un contrepoids (2) de rappel en partie basse, **caractérisée en ce que** la voilure pivote alternativement par l'action d'une ou plusieurs masselottes agissant par gravité, de manière à la positionner respectivement en prise au vent et en drapeau lors des phases aller et retour du mouvement de balance de la perche (1), et **en ce qu'**un dispositif mécanique transforme les oscillations multidirectionnelles auxquelles est soumise cette perche (1) en pulsions rotatives toujours de même sens appliquées sur un arbre de sortie (13, 14).

2. Eolienne selon la revendication 1) **caractérisée en ce que** la perche (1) repose sur le dispositif mécanique par l'intermédiaire d'un cadre (6) d'où sont issus deux ergots (7) et (8) disposés en vis à vis dans le prolongement l'un de l'autre suivant un axe perpendiculaire à celui de la perche et le rencontrant au point axial (3).

3. Eolienne selon la revendication 2) **caractérisée en ce que** le cadre (6) et ses deux ergots (7) et (8) font office de fourchette pivotant selon un des axes d'un caisson carré (4) en le saisissant extérieurement par deux douilles-palier aménagées chacune au milieu d'une de deux faces opposées de ce caisson.

4. Eolienne selon la revendication 3) **caractérisée en ce que** le caisson carré (4) est lui-même engagé par deux autres douilles-palier aménagées chacune au milieu d'une de ses deux autres faces opposées, sur un arbre fixe (5) sur lequel il pivote suivant son deuxième axe, en entraînant le cadre (6).

5. Eolienne selon l'une quelconque des revendications 3) et 4) **caractérisée en ce que** quatre engrenages pignons de même rapport (9)(10)(11)(12) sont disposés en prise exterieurement autour du caisson carré (4), libres sur leur support, excepté l'un d'entre eux (12) qui est solidaire de l'ergot (8) sur lequel il est engagé.

6. Eolienne selon la revendication 5) **caractérisée en ce que** chacun des pignons (9) et (10) engagé sur l'arbre fixe (5) entraîne un couple de systèmes d'irréversibles à simple effet disposés de manière à ce qu'ils provoquent sur deux arbres (13) et (14) s'entraînant mutuellement, des pulsions rotatives de même sens.

7. Eolienne selon la revendication 1),**caractérisé en ce que** la voilure se remet en position de prise au vent par retour gravitationnel des masselottes lors du repos vertical de la perche.

8. Eolionne selon la revendications 1) **caractérisé en ce que** la perche (1) est pourvue en toute ou partie de sa hauteur d'un carénage (20) à profil aérodynamique pouvant jouer en libre pivot autour de son axe et s'orienter, ainsi que la voilure, suivant le sens du vent grâce à un empennage (21).

## Claims

1. Windmill operating in accordance with a pendulum movement applied to a pole (1) pivoting about an axial point (3), equipped with sails in the upper part and a return balance-weight (2) in the lower part, **characterised in that** the sails pivot alternately by the action of one or more flyweights acting by gravity, so as to position them to catch the wind and to feather, respectively, during the back and forth phases of pendulum movement of the pole (1) and **in that** a mechanical device converts the multidirectional oscillations to which this pole (1) is subjected into rotary pulses, always in the same direction, applied to an output shaft (13, 14).

2. Windmill according to Claim 1), **characterised in that** the pole (1) bears on the mechanical device via a frame (6) from where two pins (7) and (8) emerge which are arranged facing one another in the extension of one another along an axis perpendicular to that of the pole and intersecting the latter at the axial point (3).

3. Windmill according to Claim 2), **characterised in that** the frame (6) and its two pins (7) and (8) serve as a fork pivoting about one of the axes of a square case (4) by holding it from the outside via two bearing bushes each provided in the middle of one of two opposing faces of this case.

4. Windmill according to Claim 3), **characterised in that** the square case (4) is itself mounted, via two other bearing bushes each provided in the middle of one of its two other opposing faces, on a fixed shaft (5) on which it pivots about its second axis, driving the frame (6).

5. Windmill according to any one of Claims 3) and 4), **characterised in that** four pinion gears of the same ratio (9)(10)(11)(12) are arranged with external engagement around the square case (4), free running on their support, with the exception of one them (12) which is rigidly locked with the pin (8) on which it is mounted.

6. Windmill according to Claim 5), **characterised in that** each of the pinions (9) and (10) mounted on the fixed shaft (5) drives a pair of single effect non-reversing systems arranged such that they give rise to rotary pulses in the same direction on two shafts (13) and (14) that drive one another.

7. Windmill according to Claim 1), **characterised in that** the sails return to the position in which they catch the wind by gravitational return of the flyweights when the pole is vertically at rest.

8. Windmill according to Claim 1), **characterised in that** the pole (1) is provided over all or part of its height with a fairing (20 (sic)) having an aerodynamic profile that is able to operate by pivoting freely about its axis and to orient itself, as well as the sails, in accordance with the direction of the wind by virtue of a tail plane (21 (sic)).

## Patentansprüche

1. Windkraftanlage, welche der Bewegung eines Pendels folgend betrieben wird, das an einer um einen axialen Punkt (3) schwenkbaren Stange (1) angebracht ist, welche oben mit einer Flügelfläche und unten mit einem Rückhol-Gegengewicht (2) versehen ist, **dadurch gekennzeichnet, dass** die Flügelfläche unter der Einwirkung eines oder mehrerer durch die Schwerkraft wirkender Fliehgewichte derart alternativ schwenkt, dass sie bei den Hin- und Herphasen der Pendelbewegung der Stange (1) in die Windrichtung beziehungsweise aus der Windrichtung gedreht wird und dass eine mechanische Vorrichtung die multidirektionalen Schwingungen dieser Stange (1) in Rotationsimpulse umsetzt, welche stets gleichsinnig und einer Abtriebswelle (13, 14) zuführbar sind.

2. Windkraftanlage nach Anspruch 1, **dadurch gekennzeichnet, dass** die Stange (1) sich auf der mechanischen Vorrichtung über einen Rahmen (6) abstützt, aus dem zwei Vorsprünge (7) und (8) ragen, welche in ihrer gegenseitigen Verlängerung gemäß einer Achse einander gegenüberstehen, welche senkrecht zur Stangenachse verläuft und diese an dem axialen Punkt (3) trifft.

3. Windkraftanlage nach Anspruch 2, **dadurch gekennzeichnet, dass** der Rahmen (6) und seine zwei Vorsprünge (7) und (8) als gemäß einer der Achsen eines quadratischen Kastens (4) schwenkende Gabel dienen, indem sie diesen dabei von außen durch zwei Lagerbuchsen hindurch durchgreifen, welche jeweils in der Mitte einer von zwei entgegengesetzten Seiten dieses Kastens angeordnet sind.

4. Windkraftanlage nach Anspruch 3, **dadurch gekennzeichnet, dass** der quadratische Kasten (4) selbst von zwei weiteren Lagerbuchsen aufgenommen ist, welche jeweils in der Mitte einer seiner zwei weiteren entgegengesetzten Seiten auf einer festen Welle (5) angeordnet sind, auf welcher er gemäß seiner zweiten Achse schwenkt und dabei den Rahmen (6) mitnimmt.

5. Windkraftanlage nach einem beliebigen der Ansprüche 3) und 4), **dadurch gekennzeichnet, dass** vier Zahnräder mit gleichem Verhältnis (9) (10) (11) (12) in Eingriff außen um den quadratischen Kasten (1) angeordnet und auf ihrem Lager frei sind, außer einem (12) davon, welches mit dem Vorsprung (8) fest verbunden ist, an welchem es aufgenommen ist.

6. Windkraftanlage nach Anspruch 5, **dadurch gekennzeichnet, dass** die jeweiligen, auf der festen Welle (5) aufgenommenen Zahnräder (9) und (10) ein Paar von Systemen von einfach wirkenden Irreversiblen mitnehmen, welche derart angeordnet sind, dass sie auf zwei sich gegenseitig antreibenden Wellen (13) und (14) gleichsinnige Rotationsimpulse bewirken.

7. Windkraftanlage nach Anspruch 1, **dadurch gekennzeichnet, dass** die Flügelfläche sich dadurch wieder aus der Windrichtung dreht, dass die Fliehgewichte bei der vertikalen Ruhestellung der Stange sich unter der Wirkung der Schwerkraft zurückbewegen.

8. Windkraftanlage nach Anspruch 1, **dadurch gekennzeichnet, dass** die Stange (1) entlang ihrer gesamten Höhe oder auf einem Teil davon mit einer Verkleidung (20) mit stromlinienförmigem Profil versehen ist, welche um ihre Achse frei schwenkbar ist und sich sowie die Flügelfläche mit Hilfe eines Leitwerkes (21) entsprechend der Windrichtung orientieren kann.
